# EUROPÄISCHE PATENTANMELDUNG

(11) **EP 2 006 755 A2**
(43) Veröffentlichungstag der Anmeldung: **24.12.2008**
(21) Anmeldenummer: 08006840.6
(22) Anmeldetag: 04.04.2008
(51) Int. Cl.: G05D 23/19, F16K 31/04

(54) **Betätigungsvorrichtung für Heizkörperventil**

(30) Priorität: 22.05.2007 DE 202007007374 U
(71) Anmelder: Conrad Electronic SE, 92240 Hirschau (DE)
(72) Erfinder: Greiner, Harald, 92660 Neustadt an der Waldnaab (DE)
(74) Vertreter: Stippl, Hubert

(57) **Zusammenfassung**

Betätigungsvorrichtung (1) für ein Ventil, insbesondere für ein Heizkörperventil, mit einem Motor (3), einer Energiequelle (5) zum Antrieb des Motors (3), einem vom Motor (3) angetriebenen Getriebe (4), welches mehrere Zahnräder umfasst, einem durch den Motor (3) über das Getriebe (4) betätigbaren Ventilstößel (6) zur Betätigung des Ventils sowie einem Handrad, wobei das Handrad (6) vorzugsweise eine langgestreckte Form besitzt und als unlösbarer Bestandteil des Ritzels (7) des Getriebes (4) vorgesehen ist, eine Öffnung (8) in der Abdeckung des Getriebes (4) vorgesehen ist, durch die das Handrad (6) zur Betätigung des Ritzels (7) von außen zugänglich ist.

## Beschreibung

Die vorliegende Erfindung betrifft eine Betätigungsvorrichtung für ein Ventil, insbesondere für ein Heizkörperventil, mit einem Gehäuse, einem Motor, einer Energiequelle zum Antrieb des Motors, einem vom Motor angetriebenen Getriebe, welches mehrere Zahnräder umfasst, einem durch den Motor über das Getriebe betätigbaren Ventilstößel zur Betätigung des Ventils sowie einem Handrad.

Aus der DE 202 11 501 U1 ist eine entsprechende Betätigungsvorrichtung bekannt. Diese umfasst ein loses Handrad, welches in einer Halterung am Gehäuse vorgehalten wird und bei Bedarf durch eine Durchführungsöffnung, die sich im Batteriehaltefach befindet, in dem Gehäuse auf eine Führungshülse aufgesteckt werden kann und dadurch in Eingriff zum Getriebe kommt. Diese Konstruktion hat den Nachteil, dass einerseits aufwendige konstruktive Maßnahmen für die Aufbewahrung am Gehäuse sowie Befestigung des Handrads im Getriebe eine aufwendige Konstruktion notwendig machen. Andererseits kann das Handrad konstruktionsbedingt leicht verloren gehen.

Aus der EP 0 961 958 B1 ist eine Betätigungsvorrichtung für ein Heizkörperventil bekannt, bei dem das Handrad als Koppelelement eines in einem Oberteil des Gehäuses angeordneten Getriebes ausgebildet ist. Das Handrad befindet sich konstruktionsbedingt im Unterteil des Gehäuses und ist als Kegelrad ausgebildet, das im zusammengebauten Zustand mit dem Oberteil Bestandteil des Getriebes wird. Diese Konstruktion macht es erforderlich, alle funktionswesentlichen aktiven Teile im Oberteil des Gehäuses unterzubringen, wodurch sich konstruktive Einschränkungen ergeben. Außerdem wird das Getriebe zum Zwecke der Notbetätigung durch den Anwender demontiert.

Die Aufgabe der vorliegenden Erfindung besteht darin, eine gattungsgemäße Betätigungsvorrichtung zur Verfügung zu stellen, welche zum einen einfachen Gehäuseaufbau ermöglicht, zum anderen eine allzeit sichere Notbetätigung gewährleistet und dabei das Übersetzungsgetriebe im werkseitig montierten Zustand belässt.

Die vorstehende Aufgabe wird bei der gattungsgemäßen Betätigungsvorrichtung dadurch gelöst, dass das Handrad vorzugsweise eine langgestreckte Form besitzt und als unlösbarer Bestandteil eines Ritzels des Getriebes vorgesehen ist, eine Öffnung in der Abdeckung des Getriebes vorgesehen ist, durch die das Handrad zur Betätigung des Ritzels von außen zugänglich ist. Dadurch, dass das Handrad als unlösbarer Bestandteil eines Ritzels des Getriebes vorgesehen ist, ist es unverlierbar an der Betätigungsvorrichtung vorgesehen. Darüber hinaus kann die beanspruchte Konstruktion in einfacher Weise realisiert werden, da es lediglich notwendig ist, eine Öffnung in der Abdeckung des Getriebes vorzusehen, durch die hindurch die Betätigung des Ritzels erfolgen kann. Abgesehen hiervon gibt es sonst keine Einschränkung der Freiheitsgrade der Konstruktion.

Zweckmäßigerweise umfasst die Betätigungsvorrichtung einen Aufnahmeraum für die Energiequelle, der mit einem Deckel verschließbar ist. Das Handrad ragt durch eine Öffnung im Boden des Aufnahmeraums in diesen hinein. Hierdurch ist das Handrad zum einen vor mechanischen Beeinträchtigungen sicher, zum anderen gewährleistet die vorgenannte Merkmalskombination eine gute Zugänglichkeit und Bedienbarkeit des Handrads im Notfall. Der Aufnahmeraum kann gleichzeitig das Getriebe abdecken. Er kann aber auch zusätzlich vorgesehen sein.

Weiterhin ist zweckmäßigerweise vorgesehen, dass es sich bei dem das Handrad umfassende Ritzel um ein im Kraftfluss des Getriebes befindliches Ritzel handelt. Mit anderen Worten, es handelt sich um kein zusätzlich an das Getriebe anzusetzendes sondern um ein ohnehin für die Kraftübertragung von Stellmotor zum Ventilstößel bereits vorhandenes Ritzel. Hierdurch wird die Konstruktion vereinfacht und die Teilevielfalt reduziert, da ein zusätzlich einzubringendes Ritzel nicht erforderlich ist.

Zweckmäßigerweise handelt es sich bei dem Handrad um ein Handrad mit langgestreckter, insbesondere stabförmiger Form. Dieses erfordert einen geringfügigen Platzbedarf und gewährleistet gleichzeitig eine gute Bedienbarkeit.

Das Handrad stellt eine Verlängerung der Dreh- und Lagerachse des Ritzels dar.

Gemäß einer Ausgestaltung der vorliegenden Erfindung ist das Ritzel an dessen einen Seite von dem Handrad und an dessen anderer Seite von mindestens einem weiteren Ritzel kleineren Durchmessers benachbart. Somit realisiert das betreffende Ritzel, welches das Handrad trägt, gleichzeitig eine Getriebestufe.

Dadurch, dass gemäß einer weiteren Ausführungsform der Aufnahmeraum mindestens ein Fach für die Energiequelle, z.B. für eine Batterie oder einen Akku, aufweist und das Handrad sich außerhalb des Fachs im Aufnahmeraum befindet, ist das Handrad besonders einfach zugänglich. Insbesondere ist es nicht erforderlich, eine Batterie aus ihrem Fach herauszunehmen.

Eine zweckmäßige Ausgestaltung der vorliegenden Erfindung wird nachstehend anhand von Zeichnungen näher erläutert. Wiederkehrende identische Merkmale werden der Übersichtlichkeit halber lediglich mit einer einzigen Bezugsziffer versehen. Es zeigen:
- Fig. 1: eine perspektivische Darstellung der erfindungsgemäßen Betätigungsvorrichtung mit geschlossenem Deckel des Aufnahmeraums;
- Fig. 2: eine perspektivische Ansicht der Betätigungsvorrichtung von Fig. 1 mit abgenommenem Deckel des Aufnahmeraums;
- Fig. 3: eine Seitenansicht der Darstellung nach Fig. 2 mit Einblick in das Innere des Getriebes sowie
- Fig. 4: eine Seitenansicht des Getriebes einschließlich Antriebs.

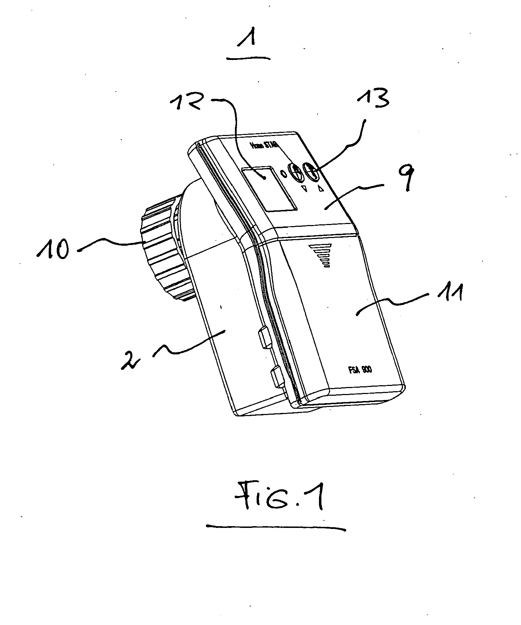

Bezugsziffer 1 in Fig. 1 bezeichnet die Betätigungsvorrichtung in ihrer Gesamtheit. Sie ist dazu vorgesehen, mittels einer Anschlusseinrichtung auf ein herkömmliches Thermostatventil, welches sich unmittelbar am Heizkörper befindet, aufgeschraubt zu werden. Diese Ausgestaltung der Betätigungsvorrichtung für Heizkörperventile ist für einen Datenaustausch per Funk konzipiert.

Die Betätigungsvorrichtung 1 umfasst ein unteres Gehäuseteil 2, in dem sich das Getriebe sowie der Antrieb befinden. Das untere Gehäuseteil 2 steht mit einem oberseitigen, zweigeteilten Gehäuseteil 9 in Verbindung. Im in Fig. 1 oberseitigen Teil des Gehäuses befindet sich ein Display 12 sowie Bedienelemente 13. Der sich daran anschließende, in Fig. 1 Teil 11 des oberseitigen Gehäuseteils 9 stellt den Deckel für einen Aufnahmeraum der Energiequelle dar.

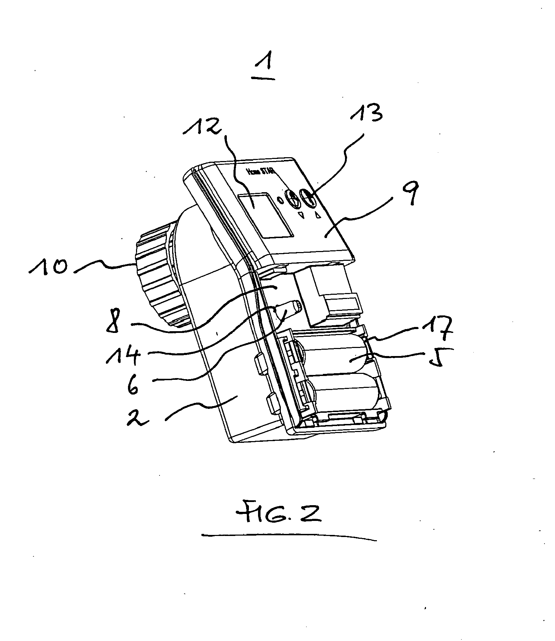

Wie sich aus Fig. 2 ergibt, befindet sich im Aufnahmeraum 8 eine Energiequelle 5 in Form von Batterien, die in jeweils dafür vorgesehene Fächer 17 eingesetzt werden. Im Ausführungsbeispiel der Fig. 2 befinden sich zwei Batterien in dem Aufnahmeraum 8.

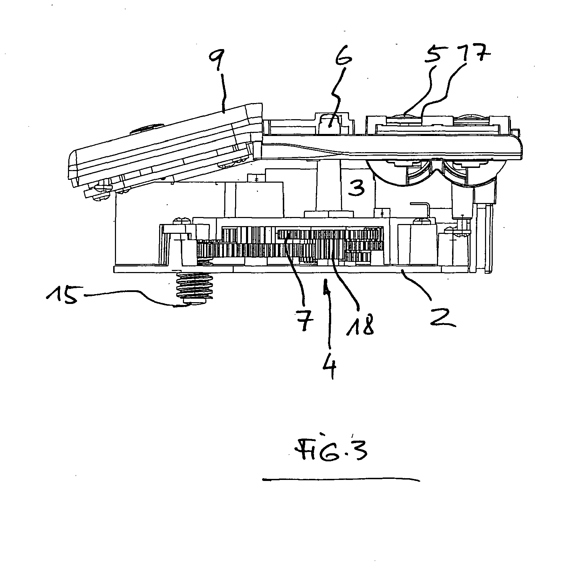

Im Inneren des Aufnahmeraums 8 ist eine Öffnung 14 vorgesehen, durch die hindurch ein Handrad 6 in den Aufnahmeraum 8 hinein ragt. Das Handrad 6 ist dazu vorgesehen, im Notfall eine Betätigung des Ventilstößels von Hand durchführen zu können. Fig. 3 zeigt eine Seitenansicht der Darstellung nach Fig. 2 mit einem Einblick in das innere des Getriebes 4. Es ist zu erkennen, dass das Handrad 6 eine Verlängerung der Achse des Ritzels 7 des Getriebes 4 realisiert. Das Handrad 6, das Ritzel 7 sowie das sich daran anschließende Ritzel 18 mit kleinerem Durchmesser sind als ein einstückiges Bauteil vorgesehen. Das Ritzel 7 wird vom Motor 3 her angetrieben, wohingegen das Ritzel 18 dazu vorgesehen ist, die Drehbewegung zu dem Ventilstößel 15 zugeordneten Ritzel weiterzugeben.

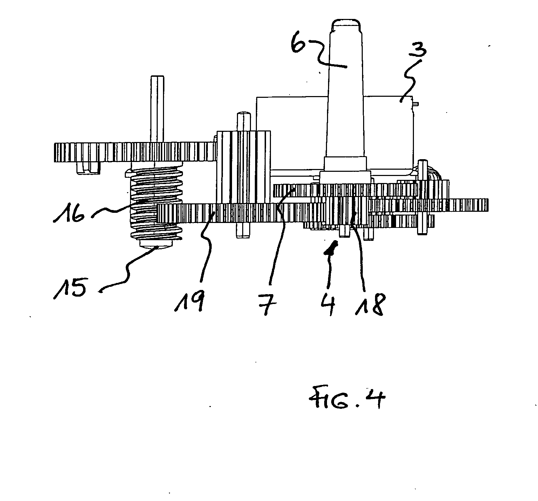

Das Handrad 6, Ritzel 7 sowie weitere Ritzel 18 sind, wie dies aus Fig. 4 gut zu erkennen ist, als ein einteiliges Bauteil vorgesehen. Das die Handhabe 6 tragende Ritzel 7 befindet sich im Kraftfluss des Getriebes 4, d.h. muss als solches ohnehin vorgesehen sein. Die Bezugsziffer 16 steht für ein Umsetzungsgetriebe zur Wandlung einer rotatorischen in eine translatorischen Bewegung.

Das Ritzel 18 mit reduziertem Durchmesser kämmt ein weiteres Ritzel 19 mit größerem Durchmesser, welches über weitere Ritzel dem Umsetzungsgetriebe 16 zugeordnet ist. Hierdurch wird eine besondere Leichtigkeit beim Drehvorgang erzielt. Mit dem Handrad 6 ist es möglich, über die Drehbewegung des Ritzels 18 eine Verstellung des Ventilstößels 15, beispielsweise bei der inaktiven Energiequelle oder dergleichen, vorzunehmen.

Als Ritzel für das auszubildende Handrad wird das ausgewählt, das ein geringes Betätigungsmoment bei ausreichender Übersetzung vom Handrad 6 zum Motor 3 und zum Ventilstößel 15 aufweißt, d.h. nicht nahe des Endes der Getriebekette liegt.

Die vorliegende Erfindung ermöglicht es, eine Betätigungsvorrichtung zur Verfügung zu stellen, die eine geringe Teileanzahl gewährleistet, die eine einfache Konstruktion darstellt und die sicher im Notfall über das Handrad zu bedienen ist.

### BEZUGSZEICHENLISTE

- 1: Betätigungsvorrichtung
- 2: Gehäuse
- 3: Motor
- 4: Getriebe
- 5: Energiequelle
- 6: Handrad
- 7: Ritzel
- 8: Aufnahmeraum
- 9: Gehäuse
- 10: Anschlusseinrichtung
- 11: Deckel für Aufnahmeraum
- 12: Display
- 13: Bedienungselemente
- 14: Öffnung in Aufnahmeraum
- 15: Ventilstößel
- 16: Umsetzungsgetriebe
- 17: Fach für Akku
- 18: Ritzel
- 19: Ritzel

## Patentansprüche

1. Betätigungsvorrichtung (1) für ein Ventil, insbesondere für ein Heizkörperventil, mit
einem Motor (3), einer Energiequelle (5) zum Antrieb des Motors (3), einem vom Motor (3) angetriebenen Getriebe (4), welches mehrere Zahnräder umfasst, einem durch den Motor (3) über das Getriebe (4) betätigbaren Ventilstößel (6) zur Betätigung des Ventils sowie einem Handrad,
**dadurch gekennzeichnet, dass**
das Handrad (6) vorzugsweise eine langgestreckte Form besitzt und als unlösbarer Bestandteil des Ritzels (7) des Getriebes (4) vorgesehen ist, eine Öffnung (8) in der Abdeckung des Getriebes (4) vorgesehen ist, durch die das Handrad (6) zur Betätigung des Ritzels (7) von außen zugänglich ist.

2. Betätigungsvorrichtung nach Anspruch 1,
**dadurch gekennzeichnet, dass**
ein mit einem Deckel (9) verschließbarer Aufnahmeraum (8) für die Energiequelle (5) vorgesehen ist und das Handrad (6) aus dem Bereich des Getriebes (4) in den Aufnahmeraum (8) hineinragt.

3. Befestigungsvorrichtung nach Anspruch 1 oder 2,
**dadurch gekennzeichnet, dass**
es sich bei dem das Handrad umfassenden Ritzel (7) um ein im Kraftfluss des Getriebes (4) befindliches Ritzel handelt.

4. Betätigungsvorrichtung nach einem der vorhergehenden Ansprüche,
**dadurch gekennzeichnet, dass**
das Ritzel (7) an dessen einer Seite von dem Handrad (6) und an dessen anderer Seite von einem Ritzel kleineren Durchmessers aufweist.

5. Betätigungsvorrichtung nach einem der vorhergehenden Ansprüche 2 - 4,
**dadurch gekennzeichnet, dass**
der Aufnahmeraum (8) mindestens ein Fach (17) für die Energiequelle (5) aufweist und das Handrad sich außerhalb des Fachs (17) im Aufnahmeraum befindet.
